Europäisches Patentamt

European Patent Office

Office européen des brevets

(11) Veröffentlichungsnummer: **0 264 781**
**B1**

(12) **EUROPÄISCHE PATENTSCHRIFT**

(45) Veröffentlichungstag der Patentschrift:
27.06.90

(51) Int. Cl.⁵: **B65G 37/02**

(21) Anmeldenummer: 87114941.5

(22) Anmeldetag: 13.10.87

(54) **Anlage zum Aufteilen von Platten und Fördern und Stapeln der Zuschnitte.**

(30) Priorität: 23.10.86 DE 3636107
24.10.86 DE 3636323

(43) Veröffentlichungstag der Anmeldung:
27.04.88 Patentblatt 88/17

(45) Bekanntmachung des Hinweises auf die Patenterteilung:
27.06.90 Patentblatt 90/26

(84) Benannte Vertragsstaaten:
AT BE CH DE ES FR GB GR IT LI LU NL SE

(56) Entgegenhaltungen:
DE-A- 2 702 725

(73) Patentinhaber: Jenkner, Erwin, Lindenstrasse 13,
D-7261 Gechingen-Bergwald(DE)

(72) Erfinder: Jenkner, Erwin, Lindenstrasse 13,
D-7261 Gechingen-Bergwald(DE)

(74) Vertreter: Gleiss, Alf-Olav, Dipl.-Ing. et al,
Patentanwaltskanzlei Gleiss & Grosse
Silberburgstrasse 187, D-7000 Stuttgart 1(DE)

**Beschreibung**

Die Erfindung betrifft eine Anlage gemäß dem Oberbegriff des Anspruches 1.

Bei einer bekannten Anlage dieser Art (DE-OS 27 02 725) werden die auf einer Buntaufteilsägeanlage durch Zersägen von Plattenvorlagen erhaltenen Zuschnitte auf mehrere parallel nebeneinander angeordnete Rollenbahnen nach Format sortiert verteilt.Jeder solchen Rollenbahn ist eine Stapeleinheit zum Stapeln der ihr zugeführten Zuschnitte zugeordnet. Jeder an einer solchen Stapeleinheit gebildete Zuschnittstapel kann dann von dieser Stapeleinheit mittels einer weiteren Rollenbahn abgeführt und zu einer Verladestation befördert werden.

Da jede Rollenbahn, die zu einer Stapeleinheit führt, nur jeweils gleichformatige Zuschnitte empfangen und zu der Stapeleinheit transportieren kann, sind eine größere Anzahl solcher Rollenbahnen mit zugeordneten Stapeleinheiten erforderlich, um das Sägen einer entsprechend großen Anzahl unter schiedlicher Zuschnitte auf der Buntaufteilsägeanlage aus Platten zuzulassen.

Jeder Zuschnitt besteht aus einer der Anzahl der Platten der betreffenden Plattenvorlage entsprechenden Anzahl von Einzelzuschnitten. Die Plattenvorlage kann aus einer Platte oder einem Plattenpaket bestehen.

Es ist ferner bei Stapelanlagen, die Buntaufteilsägeanlagen zum Stapeln von auf ihnen gesägten Zuschnitten nachgeordnet sind, bekannt, zwei Stapeleinheiten für Zuschnitte unmittelbar nebeneinander anzuordnen, von denen der letzten Stapeleinheit eine Abfuhrrollenbahn nachgeordnet ist, die dem Abtransport der auf beiden Stapeleinheiten gebildeten Stapel dient. Zu diesem Zweck sind die Hubtische dieser beiden Stapeleinheiten unmittelbar nebeneinander so angeordnet, daß der auf dem Hubtisch der vorderen Stapeleinheit gebildete Stapel in dessen unterster Stellung über den leeren Hubtisch der hinteren Station, wenn dieser sich ebenfalls in der untersten Stellung befindet, zu dieser in Höhe dieser untersten Stellungen des Hubtisches angeordneten Abfurrollenbahn gefördert werden kann. Dies hat jedoch den Nachteil, daß erhebliche Ausfallzeiten für den Abtransport von auf dem vorderen Hubtisch gebildeten Zuschnittstapel verlorengehen können, weil dieser Abtransport es stets erforderlich macht, daß die hintere Stapeleinheit momentan leer ist und auf ihr nicht gestapelt wird.

Der Vorteil der unmittelbaren Anordnung der beiden Stapeleinheiten nebeneinander für das Fördern von Zuschnitten unterschiedlichen Formats zu ihnen, die zu ihnen auf demselben Förderweg gefördert werden, geht hierdurch wieder verloren oder weitgehend verloren.

Es ist deshalb eine Aufgabe der Erfindung, eine gattungsgemäße Anlage zu schaffen, bei der Reihenanordnung von Stapeleinheiten unter Vermeidung der erwähnten Nachteile der bekannten Reihenanordnung von Stapeleinheiten möglich ist.

Diese Aufgabe wird erfindungsgemäß durch die in Anspruch 1 angegebene Anlage gelöst.

Bei dieser Anlage kann die einzelne Stapeleinheitenreihe zwei Stapeleinheiten oder vorzugsweise sogar mehr als zwei Stapeleinheiten aufweisen, was die Zufuhr von Zuschnitten zu den Stapeleinheiten noch weiter beschleunigen und vereinfachen läßt. Es kann ohne weiteres vorgesehen sein, daß den Stapeleinheiten einer oder zweier Reihen die Zuschnitte unterschiedlichen Formats über eine gemeinsame Zuführrollenbahn zugeführt werden, was rationell ist.

Die Hubtische der Stapeleinheiten einer Reihe können unmittelbar nebeneinander angeordnet sein, was im allgemeinen besonders zweckmäßig ist. Die Erfindung macht es jedoch nicht mehr zwingenderforderlich, diese Hubtische unmittelbar nebeneinander anzuordnen, sondern sie können ggfs. auch in Abständen voneinander angeordnet sein, wenn dies aus irgendwelchen Gründen erwünscht oder notwendig ist.

Jeder Stapel, der auf einer Stapeleinheit gebildet wird, besteht jeweils aus Zuschnitten gleichen Formats, doch können gleichzeitig auf den unterschiedlichen Stapeleinheiten Zuschnitte unterschiedlichen Formats gestapelt werden. Auch können auf einer Stapeleinheit ggfs. zwei oder mehr Stapel aus Zuschnitten gleicher oder unterschiedlichen Formats gleichzeitig gestapelt werden, wenn es die Verhältnisse und die Größe des Hubtisches der Stapeleinheit zulassen.

Indem zumindest eine Stapeleinheit der betreffenden Reihe quer verfahrbar ist und ihr Hubtisch zu der betreffenden hinteren Rollenbahn überführt werden kann, damit auf diesem Hubtisch gebildete Stapel durch diese hintere Rollenbahn direkt abtransportiert werden können, ermöglicht die erfindungsgemäße Anlage raschen Durchlauf der Zuschnitte und raschen Abtransport der aus ihnen gebildeter Stapel und sehr rationelles Arbeiten dieser Anlag der Abtransport der Stapel von allen Stapel an unbehindert durch die andere oder die an Stapeleinheiten erfolgen kann, insbesonder der Rückseite derjenigen Stapeleinheit oder derjenigen Stapeleinheiten vorbei, die sich in ihrer Grundstellung befindet bzw. befinden und an der oder denen der Förderweg der betreffenden Stapel auf der hinteren Rollenbahn vorbeiführt.

Bevorzugt kann vorgesehen sein, daß rückseitig mindestens einer quer verfahrbaren Stapeleinheit ein separater Rollenbahnabschnitt der betreffenden hinteren Rollenbahn angeordnet ist und daß der Hubtisch dieser quer verfahrbaren Stapeleinheit in einen Bereich dieser hinteren Rollenbahn einfahrbar ist, der normalerweise von diesem separaten Rollenbahnabschnitt dieser hinteren Rollenbahn besetzt ist,der jedoch zum Einfahren des Hubtisches in diesen Bereich zuvor aus diesem Bereich heraus verfahrbar ist. Auch kann in vielen Fällen zweckmäßig vorgesehen sein, daß bei mindestens einer Stapeleinheitenreihe auch die in der Reihe letzte Stapeleinheit quer verfahrbar und der rückseitig von ihr befindliche Bereich der hinteren Rollenbahn ein separater Rollenbahnabschnitt ist, der aus der hinteren Rollenbahn herausführbar ist, um an seiner Stelle den Hubtisch dieser Stapeleinheit in diese hintere Rollenbahn einfügen zu können.

Jeder rückseitig einer in der Grundstellung befindlichen, quer verfahrbaren Stapeleinheit angeordnete separate Rollenbahnabschnitt der betreffenden hinteren Rollenbahn kann zum Freimachen des von ihm eingenommenen Bereiches der hinteren Rollenbahn für den Hubtisch der betreffenden Stapeleinheit auf irgend eine geeignete Weise aus diesem Bereich heraus bewegt werden, vorzugsweise mit der betreffenden Stapeleinheit mitbewegt oder vertikal nach unten abgesenkt werden.

Der rückseitig einer Stapeleinheit befindliche Bereich oder separate Längsabschnitt der Rollenbahn kann im Abstand von der betreffenden Stapeleinheit und ihrer Rückseite angeordnet oder an der Stapeleinheit mit oder ohne Abstand von ihrer Rückseite angeordnet sein oder sonstige geeignete Anordnung haben.

Auch erlaubt die Erfindung gleichläufigen Fluß der den Stapeleinheiten zulaufenden Zuschnitte und der von den Stapeleinheiten abzuführenden Stapel, was bei derartigen Anlagen erwünscht und äußerst vorteilhaft ist.

Auch ermöglicht die erfindungsgemäße Anlage die Aufstellung praktisch beliebig vieler Stapeleinheiten in jeweils einer Reihe, wodurch die Anzahl der gleichzeitig stapelbaren Zuschnitte unterschiedlichen Format auf ihr praktisch beliebig groß gemacht werden kann, so daß diese Anlage auch Aufteilbilder der Plattenvorlagen erlaubt, wie sie bei den vorbekannten Anlange, wenn überhaupt, nur mit erheblich größerem Aufwand bewältigbar waren.

Auch ist der Platzbedarf der Anlage relativ gering, so daß auch eine bessere Ausnutzung des Raumes oder Raumangebotes möglich ist. Auch ermöglicht diese erfindungsgemäße Förder- und Stapelanlage, daß die Buntaufteilsägeanlage mti kurzen Taktzeiten die Plattenvorlagen zu Zuschnitten zersägen kann, weil diese Zuschnitte rasch durch die erfindungsgemäße Anlage gefördert und gestapelt werden können.

Die Überführung der aus einer Plattenvorlage auf der Buntaufteilsägenanlage erhaltenen Zuschnitte zu den Stapeleinheiten kann auf unterschiedliche Weise erfolgen.

Bei einer bevorzugten Ausführungsform kann die auf der Buntaufteilsägeanlage erhaltene, in die Zuschnitte durchschnittene Plattenvorlage in an sich bekannter Weise zunächst auf ein Abstreiftablett im Ganzen überführt werden, von welchem die sich parallel zu einer Abstreifleiste oder dergl. einer Abstreifeinrichtung erstreckenden Streifen aus Zuschnitten durch das Abstreiflineal quer zu ihrer Längsrichtung durch senkrecht zu dieser Längsrichtung dieser Streifen erfolgende Relativbewegung zwischen der Abstreifleiste und dem Abstreiftablett vorzugsweise unter Vereinzelung herunterschiebbar sind. Dabei kann z. B. vorgesehen sein, daß diese Streifen auf mindestens einen Verteilwagen überführt oder auf ihn direkt vom Abstreiftablett aus abgelegt werden, der sie auf mehrere, den Stapeleinheiten vorgeordnete stationäre Zuführrollenbahnen verteilt. Oder es kann vorgesehen sein, was besonders vorteilhaft ist, daß das Abstreiftablett mit der Abstreifeinrichtung zu mehreren, zu Stapeleinheitenreihen führenden Zuführrollenbahnen von Zuschnitten auf sie verfahren werden kann, um diese so direkt auf diese Zuführrollenbahnen in vorzugsweise programmierter Weise zu überführen. Die Zuführrollenbahn kann fest angeordnet oder auch quer zu unterschiedlichen Stapeleinheitenreihen verfahrbar vorgesehen sein.

Auch beliebige andere Möglichkeiten bestehen natürlich, um die von der Buntaufteilsägeanlage kommenden Zuschnitte unter Sortierung nach Format zu den Stapeleinheiten zu überführen.

Die Erfindung ermöglicht stets kostengünstige, platzsparende Anordnung solch großer Anzahlen von Stapeleinheiten, daß die Zuschnitte auch bei kurzen Taktzeiten der Buntaufteilsägeanlage noch nach Format sortiert und gestapelt werden können.

Die erfindungsgemäße Anlage erlaubt unterschiedliche Ausgestaltungen und ermöglicht eine Flexibilität in der Planung und Ausführung, wie es bisher nicht möglich war.

So kann in vielen Fällen zweckmäßig vorgesehen sein, daß mindestens einer hinteren Rollenbahn entgegen der Richtung, in der sie die auf sie überführten Zuschnittstapel zu einer Abladestation oder weiterführenden Station überführt, noch eine Palettenrollenbahn zum Zuführen von Paletten zu in ihre ausgefahrenen Stellungen gefahrenen Stapeleinheiten vorgeordnet ist, da dann deren Hubtische direkt Paletten empfangen können, auf denen dann nach Rückkehr der Stapeleinheiten in ihre Grundstellungen gestapelt wird.

Die Auflageebene der hinteren Rollenbahn kann in beliebiger Höhe innerhalb des Hubbereiches der zugeordneten Hubtische vorgesehen sein, doch kann sie besonders zweckmäßig niedriger als die oberste Stellung der Hubtische der zugeordneten Stapeleinheiten sein, und zwar bevorzugt um die Hubhöhe der Hubtische niedriger, um sie für den Abtransport der Stapel nicht anheben zu müssen und Platz zu sparen. Wenn, wie bevorzugt vorgesehen, den Stapeleinheiten mindestens einer Reihe eine vorzugsweise stationäre Zuführrollenbahn zugeordnet ist, kann deren Auflageebene zweckmäßig in Höhe der Auflageebenen der Hubtische der betreffenden Stapeleinheiten in den höchsten Stellungen dieser Hubtische sein, um deren Hubhöhe voll ausnutzen zu können.

In vielen Fällen kann zweckmäßig vorgesehen sein, daß alle Stapeleinheiten einer Reihe quer verfahrbar sind. Man kommt dann für das Abführen der auf ihnen gebildeten Zuschnittstapel mit der hinteren Rollenbahn aus.

Es ist besonders zweckmäßig, die Rollenbahn des Hubtisches und die hintere Rollenbahn und ggfs. auch die Abfuhrrollenbahn, die Zuführrollenbahn und die Speicher- oder Palettenrollenbahn als angetriebene Rollenbahnen auszubilden. Hierdurch kann der Automatisierungsgrad erhöht werden. Auch ist diese Förderart der Zuschnitte hier besonders vorteilhaft. Die Buntaufteilsägeanlage kann von irgendeiner an sich bekannten Bauart sein. Sie weist Sägeaggregate zum Ausführen der Schnitte auf, die die Plattenvorlagen in rechteckige Zuschnitte zertrennen. Die Platten können sehr groß sein, bspw. oft einige Meter lang sein.

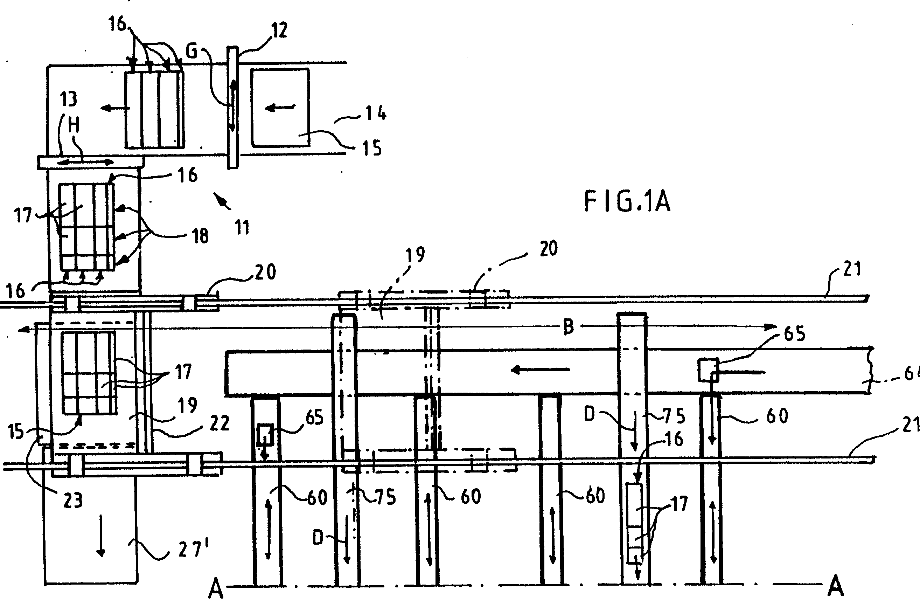

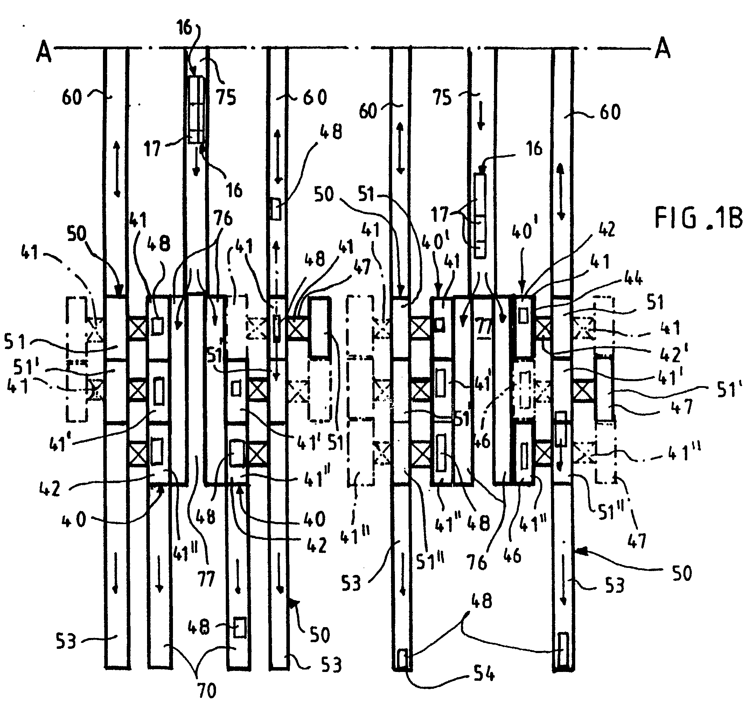

In der Zeichnung ist ein Ausführungsbeispiel der Erfindung dargestellt. Die Fig. 1A und 1B zeigen zu-

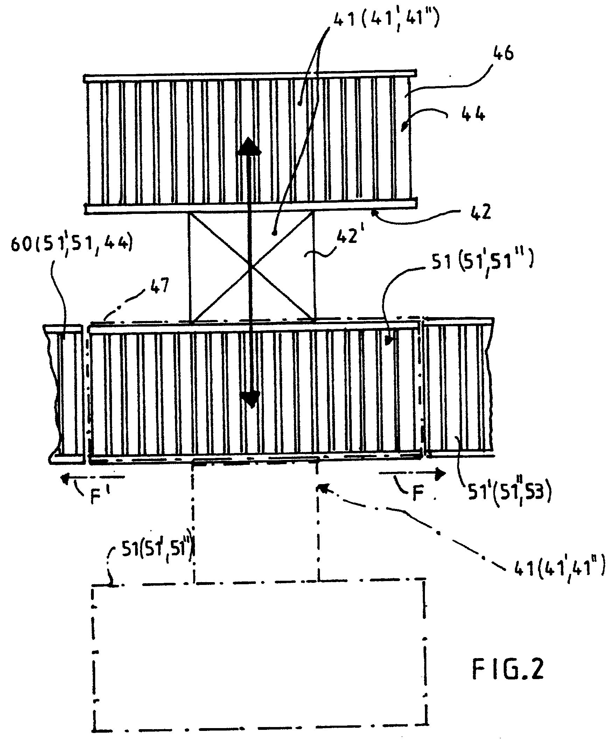

sammen eine schematisierte Draufsicht auf eine Anlage gemäß einem Ausführungsbeispiel der Erfindung und Fig. 2 eine quer verfahrbare Stapeleinheit der Anlage in vergrößerter Darstellung.

Die Fig. 1A und 1B haben die gemeinsame Schnittlinie A-A.

Eine Buntaufteilsägeanlage 11 weist eine Längssäge 12 und eine quersäge 13 auf. Die Längssäge 12 zersägt eine ihr auf einer Bahn 14 zugeführte Plattenvorlage 15, d.h. eine Platte oder ein aus einer Mehrzahl gestapelt aufeinanderliegenden Platten gleichen Formats bestehendes Plattenpaket, durch Schnitte in Pfeilrichtung G in Längsstreifen 16, und danach wird diese Plattenvorlage 15 zu der Quersäge 13 weitergeleitet, wo sie durch Schnitte in Pfeilrichtung H in Querstreifen 18 und damit in die endgültigen Zuschnitte 17 zersägt wird. Wenn die Plattenvorlage 15, aus der die Zuschnitte 17 auf diese Weise erhalten sind, aus einer einzigen Platte bestand, dann ist jeder Zuschnitt 17 ein Einzelzuschnitt. Wenn dagegen die betreffende Plattenvorlage 15 aus einer Mehrzahl von übereinanderliegenden Platten, also aus einem Plattenpaket bestand, dann besteht jeder Zuschnitt 17 aus einer entsprechenden Mehrzahl von kantengleich übereinanderliegenden Einzelzuschnitten des betreffenden Formats. In diesem Ausführungsbeispiel besteht die zersägte Plattenvorlage 15 aus vier unterschiedlich breiten Längsstreifen 16 und drei unterschiedlich breiten Querstreifen 18, die zusammen zwölf Zuschnitte 17 unterschiedlichen Formats bilden. Jeder Zuschnitt 17 kann also aus einem oder mehreren kantengleich übereinanderliegenden Einzelzuschnitten bestehen. Es sind natürlich auch beliebig andere Aufteilbilder möglich. Diese zersägte Plattenvorlage 15 wird dann von der Quersäge 13 aus selbsttätig auf ein horizontales Abstreiftablett 19 verschoben, das durch eine Tischplatte, eine Mehrzahl von eine horizontale oder schwenkbare Auflageebene bildenden Trägern, die zweckmäßig in Abstreifrichtung verlaufende, zueinander parallele Schlitze zwischen sich bilden können, ein Gitter oder dergl. gebildet sein kann.

Dieses Abstreiftablett 19 ist an einem Wagen 20 angeordnet, der hoch über dem Boden fest angeordneten, geraden Schienen 21 in Richtung des Doppelpfeiles B hin und her verfahrbar ist.

Dem Abstreiftablett 19 ist eine ebenfalls am Wagen 20 oder an einem gesonderten Wagen angeordnete Abstreifeinrichtung zugeordnet, die eine Abstreifleiste 22 oder dergl. aufweist, die relativ zum Wagen 20 und Abstreiftablett 19 parallel zur Laufrichtung des Wagens 20 lageverstellbar ist und dem Herunterschieben der Längsstreifen 16 in Richtung quer zu ihren Längsrichtungen vom dabei jeweils in Richtung des Pfeiles B bewegten Abstreiftablett 19 auf parallel zueinander ortsfest angeordnete Rollenbahnen 23, 75 dient. Die beiden Rollenbahnen 75 bilden Zuführrollenbahnen zu ingesamt vier Stapeleinheiten reihen 40, 40'. Die Rollenbahn 23 ist an einem stationär angeordneten Hubtisch unterhalb der Grundstellung des Abstreiftablettes 19 angeordnet und führt zu keiner Stapeleinheit, sondern dient dazu, auf ihr selbst Stapel aus kompletten, zersägten Plattenvorlagen 15 zu bilden, die dann über eine angetriebene Rollenbahn 27' zu einer nicht dargestellten Abnahmestation weitergeführt werden können. Dieser Hubtisch 25 und die Rollenbahn 27' sind jedoch kein notwendiger Bestandteil einer erfindungsgemäßen Anlage.

Zum Abstreifen des jeweiligen Längsstreifen 16 vom dabei etwas schräg gestellten Abstreiftablett 19 auf eine Zuführrollenbahn 75 steht die Abstreifleiste 22 über der betreffenden Rollenbahn 75 und es wird das Abstreiftablett 19 in Pfeilrichtung B senkrecht zur Längsrichtung der betreffenden Rollenbahn 75 bewegt, also unter dem betreffenden, am horizontalen Bewegen durch die Abstreifleiste 22 gehinderten Längsstreifen 16 "weggezogen". Dabei wird stets der jeweilige Längsstreifen 16 im Ganzen senkrecht zu seiner Längsrichtung durch Bewegen des Abstreiftabletts 19 in Richtung des Pfeiles B von der Abstreifleiste 22 vom Abstreiftablett 19 auf die betreffende gerade Rollenbahn 75 heruntergeschoben und liegt dann auf ihr, wie dargestellt, parallel zu ihrer Längsrichtung auf, die auch der Richtung D entspricht, in der die angetriebene Rollenbahn 75 die auf sie abgelegten Längsstreifen 16 in deren Längsrichtungen gemäß den Pfeilen D transportieren kann.

Sowohl das Aufteilen der jeweiligen Plattenvorlage 15 auf der Buntaufteilsägeanlage 11 als auch die gesamte Überführung bzw. Verteilung der Zuschnitte 17 der jeweiligen zersägten Plattenvorlage 15 auf die Rollenbahnen 75 kann voll- oder teilautomatisch programmgesteuert ablaufen.

Die Rollenbahnen 75 können verhältnismäßig schmal sein, vorzugsweise schmaler als die maximale Breite der auf dieser Anlage 10 verarbeitbaren Plattenvorlagen 15.

Durch Verfahren des Wagens 20 können die Rollenbahnen 75 in beliebig programmierbarer Weise einzeln angefahren und auf beliebig wählbare von ihnen die Streifen 16 einer jeder Plattenvorlage 15 verteilt werden.

Falls es erwünscht sein sollte, daß man auf die Zuführrollenbahnen 75 keine kompletten Streifen 16 überführt, sondern bspw. nur jedesmal einen Zuschnitt 17 oder eine Teilanzahl der Zuschnitte eines Streifens 16, kann man vorsehen, daß das Abstreiftablett zu diesem Zweck die Längsstreifen oder die betreffenden Längsstreifen zuerst auf einen Verteilwagen überführt, der die Zuschnitte einzeln oder in Gruppen auf die Rollenbahnen 75 danach verteilen kann.

Jeder der beiden Rollenbahnen 75 bildet je eine gerade Zuführrollenbahn zu je zwei einander parallel gegenüberstehenden Reihen 40,40 bzw. 40', 40' von Stapeleinheiten. In diesem Ausführungsbeispiel weist jeder derartige Stapeleinheitenreihe je drei Stapeleinheiten 41,41',41" auf, deren an ihren Vorderseiten angeordnete Hubtische 42 ein- und ausschaltbare angetriebene Rollenbahnen 44 aufweisen, um die auf ihnen gebildeten Zuschnittstapel, wie 48, abzutransportieren. Die an den Gestellen 42' der Stapeleinheiten motorisch vertikel höhenverstellbaren Hubtische 42 der Stapeleinheiten der einzelnen geraden Stapeleinheitenreihe 40,40' sind unmittelbar nebeneinander so angeordnet, daß sie bei gleicher Höheneinstellung eine durchgehende Rollenbahn bilden können, so daß die Zuschnitte 17 bzw. Stapel 48 auch auf dieser"Rollenbahn", falls erwünscht, gefördert werden können. Die den Zuführrollenbahnen 75 am nächsten liegenden Stapeleinheiten 41 jeder Reihe 40,40' sind die vorderen Stapeleinheiten 41 dieser Reihen und entsprechend die Stapeleinheiten 41' und 41" die mittleren und letzten Stapeleinheiten dieser Reihen.

In diesem Ausführungsbeispiel sind die vordere und die mittlere Stapeleinheit 41,41' jeder Reihe 40 und alle Stapeleinheiten 41,41',41" jeder Reihe 40' horizontal und rechtwinklig zu der Förderrichtung der Rollenbahnen 44 aus je einer Grundstellung, wie 46, in der zu stapelnde Zuschnitte 17 auf ihre Hubtische 42 aufgebracht und gestapelt werden, in ausgefahrene Stellungen, wie 47, verfahrbar zwecks Abtransport der auf ihnen gebildeten Stapel, wie 48, über hintere angetriebene Rollenbahnen 50, deren zu den Förderrichtungen der Rollenbahnen 44 parallelen Förderrichtungen wie dargestellt rückseitig der Stapeleinheitenreihen 40, 40' verlaufen.

Die einzelne hintere, gerade Rollenbahn 50 dient der Abfuhr von auf den quer verfahrbaren Stapeleinheiten der zugeordneten Stapeleinheitenreihe 40, 40' gebildeten Zuschnittstapel 48 zu je einer Abnahmestation oder weiterführenden Station. Jeder hintere Rollenbahn 50 weist einen stationären Rollenbahnabschnitt 53 und rückseitig der ihr zugeordneten, quer verfahrbaren Stapeleinheiten 41, 41' (Reihen 40) bzw. 41, 41', 41" (Reihen 40') je einen separaten, angetriebenen, geraden Rollenbahnabschnitt 51, 51' (Reihen 40) bzw. 51, 51', 51" (Reihen 40') auf, die einzeln für sich antreibbar und fest an den Gestellen der zugeordneten Stapeleinheiten rückseitig von ihnen angeordnet und so mit ihnen horizontal quer verfahrbar sind, wie es in Fig. 1B und für eine einzelne quer verfahrbare Stapeleinheit in Fig. 2 dargestellt ist. Jeder einzeln quer verfahrbare Stapeleinheit kann bspw. mit durch einen Motor antreibbaren Rädern auf geraden Schienen laufen. In den Grunstellungen 46 der zugeordneten Stapeleinheiten sind die jeweils einer Stapeleinheitenreihe zugeordneten Rollenbahnabschnitte 51, 51' bzw. 51, 51', 51" in Fluchtung mit dem betreffenden separaten angetriebenen Rollenbahnabschnitt 53.Die Rollenbahnabschnitte 53 dienen dem weiteren Abtransport der ihnen zugelieferten Stapel 48 zu Abnahmestationen oder weiterführenden Stationen oder dergl. Diese Rollenbahnabschnitte 53 sind stationär angeordnet, also nicht quer verfahrbar. Jeder Rollenbahnabschnitt 51, 51', 51", 53 bildet also für sich eine angetriebene Rollenbahn, die unabhängig von den anderen Rollenbahnabschnitten der betreffenden Rollenbahn 50 zur Förderung der Stapel 48 ein- und ausschaltbar ist. Die Rollenbahnen 53 können oft zweckmäßig auch friktionsangetriebene Rollenbahnen sein, die ständig eingeschaltet sind und bei Belastung durch Stapel 48 diese sofort fördern.

Jeder hinteren Rollenbahn 50 ist noch je eine mit ihr fluchtende, gesonderte, stationäre Palletten- und/oder Speicherrollenbahn 60 vorgeordnet, die vorzugsweise ebenfalls angetrieben sein kann, und zwar vorzugsweise durch einen umkehrbaren Antrieb, damit sie in Richtung der eingezeichneten Doppelpfeile fördern kann.

Bei der einzelnen hinteren Rollenbahn 50 können alle ihre Rollenbahnabschnitte an der Abfuhr von von der vorgeordneten Rollenbahn 60 kommenden, zuvor auf dieser zwichengespeicherten Stapeln 48 mitwirken. Wenn die hintere Rollenbahn 50 direkt von den Hubtischen 42 der ihr zugeordneten, quer verfahrbaren Stapeleinheiten Stapel 48 zum Ende des Rollenbahnabschnittes 53 abführt, dann wirken hier für die vordere Stapeleinheit 41 die Rollenbahnabschnitte 51', 53 (Reihe 40) bzw. 51', 51", 53 (Reihe 40'), für die mittlere Stapeleinheit 41 der Rollenbahnabschnitt 53 (Reihe 40) bzw. die Rollenbahnabschnitte 51", 53 (Reihe 40') und für die Stapeleinheit 41" bei der Reihe 40' der Rollenbahnabschnitt 53 mit.

Bei den Stapeleinheitenreihen 40 sind jeweils nur die vordere Stapeleinheit 41 und die mittlere Stapeleinheit 41' quer verfahrbar, die letzte Stapeleinheit 41" dagegen nicht, wogegen bei den Stapeleinheitenreihen 40' alle Stapeleinheiten 41, 41', 41" quer verfahrbar sind. Deshalb ist bei den beiden diesen Reihen 40' zugeordneten hinteren Rollenbahnen 50 rückseitig jeder Stapeleinheit 41, 41', 41" je ein gesonderter Rollenbahnabschnitt 51, 51', 51" vorgesehen. Jeder Rollenbahnabschnitt 51, 51', 51" wird mit der zugeordneten Stapeleinheit, wenn sie aus ihrer Grundstellung 46 in die ausgefahrene Stel lung 47 quer verfahren wird, aus der Bahn der betreffenden hinteren Rollenbahn 50 herausgefahren und an seiner Stelle die Rollenbahn 44 des Hubtisches 42 der betreffenden Stapeleinheit in die betreffende Rollenbahn 50 so eingefahren, daß diese Rollenbahn 44 dann mit der übrigen Rollenbahn 50 fluchtet und direkt an sie ein- oder beidseitig ohne oder mit geringem Abstand anschließt.Dies ist vorzugsweise in der untersten Stellung des Hubtisches 42 für dessen Rollenbahn 44 der Fall, um die maximale Stapelhöhe der Stapeleinheit ausnutzen zu können. Die hinteren Rollenbahnen 50 sind entsprechend niedrig angeordnet. Die Hubtische der Stapeleinheiten 41 können auch direkt an die Rollenbahnen 60 anschließen. Die Länge und Breite der Rollenbahnen 44 der Hubtische 42 entsprechen der Länge und Breite der an diesen Stapeleinheiten rückseitig angeordneten Rollenbahnabschnitte 51, 51', 51";und die quer verfahrbaren Stapeleinheiten 41, 41' der Reihen 40 sowie die quer verfahrbaren Stapeleinheiten 41,41', 41" der Reihen 40' sind einzeln aus ihren dem Stapeln der Zuschnitte dienenden Grunstellungen 46 in die dem Abtransport von auf ihnen befindliche Stapeln 48 dienenden ausgefahrenen Stellungen verfahrbar, so daß dann von jeder dieser Rollenbahnen 44, wenn sie dieselbe Höhenstellung wie die zugeordnete hintere Rollenbahn 50 und damit auch die der Rollenbahn 60 eingenommen hat, der betreffende Stapel 48 von ihr direkt auf den anschließenden Rollenbahnabschnitt 51' oder 51" der hinteren Rollenbahn 50 und, falls erwünscht zur Zwischenspeicherung auch auf die Rollenbahn 60 direkt oder über den oder die Rollenbahnabschnitte 51 bzw. 51,51' abgeführt werden kann. Er kann so zum beliebig weit von der zugeordneten Stapeleinheitenreihe entfernten Ende 54 der Rollenbahn 50 oder zur Rollenbahn 60 gefördert werden.

In diesem Fall dient die Rollenbahn 60 dem Zwischenspeichern des betreffenden Stapels bis er später über die Rollenbahn 50 zu deren Ende transportiert wird.

Am Ende der jeweiligen Rollenbahn 50 kann der betreffende Stapel abgenommen, bspw. auf einen Transportwagen umgeladen oder einer weiterverarbeitenden Station zugeführt werden, oder dgl..

Bei den Stapeleinheitenreihen 40 ist die jeweils letzte Stapeleinheit 41″ nicht quer verfahrbar, so daß die auf ihren Hubtischen 42 gebildeten Zuschnittstapel nicht über die hinteren Rollenbahnen 50 abgeführt werden können. Es ist deshalb jedem Hubtisch 42 dieser Stapeleinheiten 41″ unmittelbar eine zu den hinteren Rollenbahnen 50 parallele Abführrollenbahn 70 in Höhe der untersten Hubstellung des Hubtisches 42 zugeordnet, die ebenfalls in Höhe der freien Enden der hinteren Rollenbahnen 50 enden und auf die die an den Stapel einheiten 41″ der Reihen 40 gebildeten Stapel überführt und dann in den untersten Hubstellungen der betreffenden Hubtische 42 von diesen angetriebenen Rollenbahnen 70 abtransportiert werden können.

Wie dargestellt, ist der Zulauf der Zuschnitte 17 auf den Zuführrollenbahnen 75 zu den Stapeleinheiten gleichsinnig zu der Abtransportrichtung der aus ihnen gebildeten Stapel von Stapeleinheiten über die hinteren Rollenbahnen 50 bzw. auch über die Rollenbahnen 70. Dieser gleichsinnige Fluß der Zuschnitte und der Stapel ist für derartige Anlagen äußerst vorteilhaft für den weiteren Abtransport der Stapel oder deren sonstige Weiterleitung. Auch dies ermöglicht die Erfindung bei beliebig großen Anzahlen von Stapeleinheiten pro Stapeleinheitenreihe.

Obwohl bei den Stapeleinheitenreihe 40′ es wegen der quer verfahrbaren hinteren Stapelstationen 41″ nicht unbedingt notwending ist, diesen Abfuhrrollenbahnen 70 wie den Stapeleinheiten 41″ der Reihen 40 zuzuordnen, können jedoch, falls erwünscht, auch den Stapeleinheiten 41″ der Reihen 40′ solche Abfuhrrollenbahnen 70 zugeordnet werden, da dies den Durchlauf der Zuschnitte und die Abfuhr der Stapel noch beschleunigen kann und hierdurch auch mehr Abladestationen oder dergl. für die Stapel bestehen.

Die Längsrichtungen der hinteren Rollenbahnen 50 verlaufen wie dargestellt parallel zu den Stapeleinheitenreihen 40,40′ und damit auch parallel zu den Längs richtungen der Zuführrollenbahnen 75.

Die Speicher- oder Palettenrollenbahnen 60 können, wie erwähnt, dem Zwischenspeichern von Stapeln dienen. Sie können in diesem Ausführungsbeispiel jedoch auch der Zufuhr von Paletten 65 zu den Stapeleinheiten der betreffenden Stapeleinheitenreihen 40, 40′ dienen. Zu diesem Zweck ist in Höhe der Auflageebene dieser Rollenbahnen 60 eine zu ihnen quer verlaufende Zuführrollenbahn 64 für Paletten direkt am Boden des betreffenden Raumes angeordnet, die also den Bewegungsweg des wesentlich höher fahrenden Abstreiftabletts 19 nicht stören kann. Die Rollenbahn 64 kann ebenfalls eine angetriebene Rollenbahn sein und die von ihr vor die betreffenden Rollenbahnen 60 transportierten Paletten können durch Schieber oder dergl. auf die Rollenbahnen 60 überführt und von diesen auf die Hubtische 42 der quer verfahrbaren Stapeleinheiten überführt werden, indem man die betreffenden Hubtische in Fluchtung mit den Rollenbahnen 60 in die hinteren Rollenbahnen 50 einfährt. Danach kann man die betreffende Stapeleinheit in ihre Grundstellung zurückfahren und direkt auf die betreffende Palette stapeln.

Bei den beiden Reihen 40, deren hinteren Stapeleinheiten 41″ nicht quer verfahrbar sind, kann die Palettenzufuhr zu deren Hubtischen über die mittleren Stapeleinheiten 41′ erfolgen, wie man ohne weiteres erkennt. Auch der Weg über die vorderen Stapeleinheiten 41 oder sonstige Zufuhr ist möglich. Bei den Reihen 40′ können dagegen die Paletten direkt auch zu der oder den Stapeleinheiten 41″ überführt werden.

Entlang den Stapeleinheiten 41, 41′, 41″ jeder Reihe 40, 41 sind Luftkissentische 76 in Höhe der obersten Hubstellungen der Rollenbahnen 44 der Hubtische 42 angeordnet. Mittels dieser Luftkissentische 76 können die über die Zuführrollenbahnen 75 ankommenden Zuschnitte 17 zu den einzelnen Stapeleinheiten 41, 41′, 41″ der beiden Reihen 40 bzw. der beiden Reihen 40′ gefördert werden, was vorzugsweise von Hand durch je einen in dem Gang zwischen den beiden Stapeleinheitenreihen 40, 40 bzw. 40′, 40′ befindlichen Arbeiter erfolgen kann. Diese beiden Gänge sind mit 77 bezeichnet. Hierdurch ist eine sehr rasche, problemlose und einfache Überführung der ankommenden Zuschnitte 17 unterschiedlichen Formats auf die unterschiedlichen Stapeleinheiten durch den betreffenden Arbeiter möglich. Es können hier also gleichzeitig Zuschnitte von zwölf unterschiedlichen Formaten auf den Hubtischen 42 der Stapeleinheiten 41, 41′, 41″ der vier Reihen 40, 40′ gestapelt werden. Es ist jedoch auch möglich, falls gewünscht, auf den Hubtischen oder mindestens einem Hubtisch jeweils gleichzeitig mehrere Zuschnitte unterschiedlichen Formats zu gleichformatigen Stapeln zu stapeln, falls es das Aufteilprogramm der Plattenvorlagen zuläßt.

Anstelle von drei Stapeleinheiten pro Reihe 40, 40′ kann die einzelne Reihe auch nur zwei Stapeleinheiten oder auch beliebig mehr als drei Stapeleinheiten aufweisen.

Diese Anlage ist außerordentlich vielseitig und ermöglicht raschen Durchlauf der Zuschnitte, selbst dann, wenn alle Zuschnitte unterschiedliches Format haben, sowie deren Stapeln bei verhältnismäßig geringem Platzbedarf für die Anlage. Auch kann sie hohen Automationsgrad erhalten. Gegebenenfalls kann auch die beschriebene Arbeit der beiden Arbeiter in den Gängen 77 durch Automatisation in Fortfall kommen, indem man die Verteilung der Zuschnitte von den Zuführrollenbahnen 75 aus auf die einzelnen Stapeleinheiten ebenfalls automatisiert.

Man kann auch in manchen Fällen vorsehen, daß mindestens einer hinteren Rollenbahn 50 keine Speicher-oder Palettenrollenbahn 60 zugeordnet ist. Man benötigt dann an der vordersten Stapeleinheit 41 der betreffenden Stapelstationsreihe keinen hin-

teren Rollenbahnabschnitt 51, da dieser funktionslos wäre. Wenn dann die betreffende Stapeleinheitenreihe nur aus zwei Stapeleinheiten besteht, kann dann die betreffende hintere Rollenbahn nur aus der stationären Rollenbahn 53 bestehen.

Ein zweckmäßiger Arbeitsablauf der dargestellten Anlage kann bspw. wie folgt ablaufen.

Die Arbeit der Buntaufteilsägeanlage kann programmgesteuert ablaufen, desgl. das Verteilen der Längsstreifen 16 der zersägten Plattenvorlagen 15 mittels des Abstreiftablettes 19 und seiner Abstreifeinrichtung 22 auf die Zuführrollenbahnen 75. Die in den Gängen zwischen den Reihen 40 bzw. 40' der Stapeleinheiten befindlichen Arbeiter überführen die hierdurch auf den Rollenbahnen 75 zu ihren Arbeitsstationen gelangenden Zuschnitte 17 manuell über die Luftkissentische 76 auf die Hubtische 42 der betreffenden Stapeleinheiten, auf denen diese Zuschnitte nach Format sortiert gestapelt werden. Jeder Hubtisch 42 wird nach dem jedesmaligen Aufbringen eines Zuschnittes 17 auf ihn bzw. den Stapel lichtschrankengesteuert soweit abgesenkt, daß sich die obere Ebene des Stapels 48 in Höhe des betreffenden Luftkissentisches 76 wieder befindet, so daß der Arbeiter dann bei Ankunft des nächsten auf diesen Stapel aufzubringenden Zuschnittes 17 ihn von Hand über den Luftkissentisch 76 auf diesen Stapel aufbringen kann, und der Hubtisch 42 wird dann wieder lichtschrankengesteuert abgesenkt. Wenn mehrere Stapel gleichzeitig auf einem Hubtisch gebildet werden, kann das Absenken des Hubtisches erst nach Aufbringen je eines Zuschnittes auf alle diese Stapel erfolgen. Wenn die gewünschte Höhe des Stapels erreicht bzw. der Hubtisch 42 einer Stapeleinheit in seiner tiefsten Stellung angelangt ist, kann selbsttätig oder durch den Arbeiter ausgelöst der Abtransport des oder der Stapel von diesem Hubtisch erfolgen, indem im Falle der quer verfahrbaren Stapeleinheiten die betreffende Stapeleinheit aus ihrer Grundstellung 46 in die ausgefahrene Stellung 47 motorisch verfahren und dann durch Einschalten der betreffenden Rollenbahn 44 der oder die auf ihr befindlichen Stapel 48 in Pfeilrichtung F (Fig. 2) abtransportiert werden zum Überführen an das Ende der betreffenden Rollenbahn 53 oder in Pfeilrichtung F' zur Zwischenspeicherung auf der betreffenden Rollenbahn 60.

Bei den Reihen 40 werden die auf ihren Stapeleinheiten 41″ gebildeten Stapel über die Rollenbahnen 70 abgeführt.

Wenn bei dieser Anlage auf Paletten 65 gestapelt wird, dann können diese auf die Hubtische 42 der quer verfahrbaren Stapeleinheiten unmittelbar nach der jedesmaligen Abfuhr der betreffenden Stapel von den betreffenden Hubtischen auf diese Hubtische aufgebracht und dann erst die betreffenden Stapeleinheiten wieder in ihre Grundstellungen zurückgefahren werden.

Auch andere Möglichkeiten des Arbeitsablaufs der Anlage bestehen, bspw. noch höherer oder geringerer Automatisierungsgrad.

Wenn eine Stapeleinheitenreihe nur zwei Stapeleinheiten aufweist und die letzte Stapeleinheit nicht quer verfahrbar ist, dann kann jedenfalls dann, wenn dieser Reihe keine Paletten- und Speicherrollenbahn zugeordnet ist, die gesamte hintere Rollenbahn stationär angeordnet sein und ihr seitlich neben dieser Reihe vorhandene Bereich nur rückseitig der letzten Stapeleinheit dieser Reihe vorgesehen sein, so daß der Hubtisch der vorderen Stapeleinheit zum vorderen Ende der hinteren Rollenbahn bewegt werden kann. Dieser Bereich der hinteren Rollenbahn kann gegebenenfalls diese Rollenbahn allein bilden, obwohl es im allgemeinen zweckmäßiger ist, diese hintere Rollenbahn länger, vorzugsweise wesentlich länger auszubilden und sie so parallel zur Längsrichtung der Reihe über diese Reihe vorzugsweise beträchtlich überstehen zu lassen.

**Patentansprüche**

1. Anlage zum Fördern und Stapeln von Zuschnitten in Verbindung mit einer Buntaufteilsägeanlage (11), wobei die von dieser Buntaufteilsägeanlage aus Plattenvorlagen (15) hergestellten Zuschnitte (17) zu einer Mehrzahl von Stapeleinheiten (41, 41', 41″) transportierbar sind, wo sie gestapelt werden und von wo aus die gebildeten Stapel (48) über mindestens eine weiterführende Rollenbahn (50, 70) abtransportierbar sind, **dadurch gekennzeichnet**, daß mindestens zwei Stapeleinheiten (41, 41', 41″) eine Stapeleinheitenreihe (40, 40, 40', 40') bildend nebeneinander angeordnet sind, die an ihren Vorderseiten je einen Hubtisch (42) zum Stapeln aufweisen, daß dieser Stapeleinheitenreihe eine hintere Rollenbahn (50) zugeordnet ist, deren Förderrichtung parallel zur Richtung der Reihe (40, 40') dieser Stapeleinheiten verläuft und zu der mindestens eine quer zur Längsrichtung der hinteren Rollenbahn verfahrbare Stapeleinheit dieser Reihe zur Übergabe von auf ihrem Hubtisch gebildeten Stapeln auf diese hintere Rollenbahn (50) verfahrbar ist.

2. Anlage nach Anspruch 1, dadurch gekennzeichnet, daß die hintere Rollenbahn (50) einen Bereich aufweist, der rückseitig der in der Reihe letzten Stapeleinheit (41″) vorgesehen ist, und daß zumindest der der letzten Stapeleinheit (41″) dieser Stapeleinheitenreihe vorgeordnete Stapeleinheit (41, 41') durch Bewegen quer zur Längs richtung der hinteren Rollenbahn aus ihrer dem Stapeln dienenden Grundstellung (46) quer verfahrbar ist, damit ihr Hubtisch zu der hinteren Rollenbahn (50) zum Abtransport von auf ihm gebildeten Stapeln (48) überführbar ist.

3. Anlage nach Anspruch 1 oder 2, dadurch gekennzeichnet, daß ein Hubtisch (42) mindestens einer quer verfahrbaren Stapeleinheit in einen Bereich der zugeordneten hinteren Rollenbahn (50) einfahrbar ist, der normalerweise von einem separaten Rollenbahnabschnitt (51, 51', 51″) dieser hinteren Rollenbahn (50) besetzt ist, der jedoch zum Einfahren des Hubtisches in diesen Bereich aus diesem Bereich herausfahrbar ist.

4. Anlage nach Anspruch 1, 2 oder 3 dadurch gekennzeichnet, daß bei mindestens einer Stapeleinheitenreihe (40') auch die in der Reihe letzte Stapeleinheit (41″) quer verfahrbar und der rückseitig von ihr befindliche Bereich der hinteren Rollenbahn (50) ein separater Rollenbahnabschnitt (51″) ist, der aus der hinteren Rollenbahn herausführbar ist, um an seiner Stelle den Hubtisch (42) dieser Stapeleinheit (41″) in diese hintere Rollenbahn einfügen zu können.

5. Anlage nach Anspruch 3 oder 4, dadurch gekennzeichnet, daß der oder jeder aus der hinteren Rollenbahn (50) zur Freimachung des durch ihn gebildeten Bereichs der hinteren Rollenbahn für den Hubtisch der betreffenden Stapeleinheit herausführbare Rollenbahnabschnitt (51, 51′, 51″) mit der zugeordneten Stapeleinheit (41, 41′, 41″) mitbewegbar ist, vorzugsweise fest an dieser Stapeleinheit angeordnet ist, oder daß dieser Rollenbahnabschnitt aus der hinteren Rollenbahn durch vertikales Absenken herausführbar ist.

6. Anlage nach einem der vorhergehenden Ansprüche, dadurch gekennzeichnet, daß mindestens eine Stapeleinheitenreihe (40′) vorgesehen ist, bei der alle Stapeleinheiten (41, 41′, 41″) einzeln quer verfahrbare Stapeleinheiten sind.

7. Anlage nach einem der vorhergehenden Ansprüche, dadurch gekennzeichnet, daß bei mindestens einer Stapeleinheitenreihe (40) alle Stapeleinheiten (41, 41′) mit Ausnahme der letzten Stapeleinheit (41″) einzeln quer verfahrbar sind.

8. Anlage nach einem der vorhergehenden Ansprüche, dadurch gekennzeichnet, daß bei mindestens einer Stapeleinheitenreihe (40′) rückseitig der vordersten Stapeleinheit (41) kein hinterer Rollenbahnabschnitt vorgesehen ist.

9. Anlage nach einem der vorhergehenden Ansprüche, dadurch gekennzeichnet, daß mindestens einer hinteren Rollenbahn (50) eine mit ihr fluchtende Speicher- und/oder Palettenrollenbahn (60) vorgeordnet ist, die dem Zwischenspeichern von Stapeln und/oder der Zufuhr von Paletten (65) zu der oder den quer verfahrbaren Stapeleinheiten dient.

10. Anlage nach Anspruch 9, dadurch gekennzeichnet, daß zu der Speicher- und/oder Palettenrollenbahn eine rechtwinklig zu ihr angeordnete Zuführrollenbahn (64) für Paletten angeordnet ist.

11. Anlage nach einem der vorhergehenden Ansprüche, dadurch gekennzeichnet, daß die Hubtische (42) der Stapeleinheiten angetriebene Rollenbahnen zum Abtransport der auf ihnen gebildeten Stapel aufweisen.

12. Anlage nach einem der vorhergehenden Ansprüche, dadurch gekennzeichnet, daß bei mindestens einer Stapeleinheitenreihe (40) in der Grundstellung ihrer letzten Stapeleinheit (41″) deren Hubtisch (42) eine stationäre Rollenbahn zum Abtransport von Stapeln von diesem Hubtisch nachgeordnet ist.

13. Anlage nach einem der vorh ergehenden Ansprüche, dadurch gekennzeichnet, daß die hintere Rollenbahn (50) einen stationären Rollenbahnabschnitt (53) aufweist.

14. Anlage nach einem der vorhergehenden Ansprüche, dadurch gekennzeichnet, daß bei mindestens einer Stapeleinheitenreihen die Hubtische ihrer Stapeleinheiten (41, 41′, 41″) so nahe aneinander angeordnet sind, daß die Stapel direkt auch von Hubtisch zu Hubtisch überführbar sind.

15. Anlage nach einem der vorhergehenden Ansprüche, dadurch gekennzeichnet, daß mindestens eine Zuführrollenbahn (75) vorgesehen ist, die dem Fördern von Zuschnitten (17) zu mindestens einer Stapeleinheitenreihe, vorzugsweise zu zwei einander gegenüberstehenden Stapeleinheitenreihen (40, 40; 40′, 40′) dient, wobei vorzugsweise die Zuschnitte vom Ende dieser Zuführrollenbahn aus über mindestens einen Luftkissentisch (76) zu den betreffenden Stapeleinheiten überführt werden können.

16. Anlage nach Anspruch 15, dadurch gekennzeichnet, daß die Auflageebene der Zuführrollenbahn (75) um die Hubhöhe der Hubtische (42) der Stapeleinheiten höher als die Auflageebene der hinteren Rollenbahn (50) ist.

17. Anlage nach Anspruch 15 oder 16, dadurch gekennzeichnet, daß die Zuschnitte auf die Zuführrollenbahnen (75) von einem zu ihnen fahrbaren Abstreiftablett (19) aus, das der Aufnahme zersägter, kompletter Plattenvorlagen (15) dient, überführbar sind.

18. Anlage nach einem der vorhergehenden Ansprüche, dadurch gekennzeichnet, daß mindestens eine Stapeleinheitenreihe (40, 40′) mindestens drei Stapeleinheiten (41, 41′, 41″) aufweist.

**Revendications**

1. Installation pour transférer et empiler des éléments découpés, en combinaison avec une installation de sciage par divisions multiples (11), les éléments découpés (17) provenant d'ensembles à plaques (15) sortant de l'installation de sciage par divisions multiples étant transportés vers plusieurs unités d'empilage (41, 41′, 41″), pour être empilés, et partant de là, les piles (48) ainsi formées sont évacuées par l'intermédiaire d'au moins un chemin à galets (50, 70) qui contenue au-delà, installation caractérisée en ce qu'au moins deux unités d'empilage (41, 41′, 41″) formant une rangée d'unités d'empilage (40, 40, 40′, 40′) sont juxtaposées, et comportent au niveau de leur face avant, chaque fois une table relevable (42) pour assurer l'empilage, et en ce qu'à cette rangée d'unités d'empilage est associé un chemin à galets arrière (50) dont la direction de transfert est parallèle à la direction de la rangée (40, 40′) de ces unités d'empilage et en ce que parmi celles-ci au moins une unité d'empilage mobile transversalement à la direction longitudinale du chemin à galets, arrière, dans cette rangée, peut être déplacée pour le transfert des piles formées sur sa table relevable vers ce chemin à galets arrière (50).

2. Installation selon la revendication 1, caractérisée en ce que le chemin à galets arrière (50) présente une zone qui est prévue du côté arrière de la dernière unité d'empilage (41″) de la rangée et en ce qu'au moins l'unité d'empilage parmi ces dernières unités d'empilage (41″) de cette rangée d'unités d'empilage (41, 41′), peut être déplacée transversalement hors de sa position de base (46) servant à l'empilage, par déplacement transversalement à la direction longitudinale du chemin à galets arrière, pour sa table relevable puisse être transférée vers le chemin à galets arrière (50) pour l'évacuation des piles (48) formées sur cette table.

3. Installation selon la revendication 1 ou la revendication 2, caractérisée en ce qu'une table relevable (42) d'au moins une unité d'empilage mobile transversalement peut être introduite dans une zone du chemin à galets (50), arrière, associé, et qui est normalement occupée par un segment de chemin à galets (51, 51', 51″), distinct de ce chemin à galets (50) mais qui peut être sortie de cette zone pour introduire la table relevable dans cette zone.

4. Installation selon la revendication 1, 2 ou 3, caractérisée en ce que pour au moins une rangée d'unités d'empilage (40'), également la dernière unité d'empilage (41″) de la rangée est mobile transversalement et la zone du chemin à galets, arrière (50) qui se trouve sur le côté arrière est un segment de chemin à galets (51″), distinct, qui peut être sorti du chemin à galets, arrière pour introduire à sa place la table relevable (42) de cette unité d'empilage (41″) dans ce chemin à galets, arrière.

5. Installation selon la revendication 3 ou 4, caractérisée en ce que le segment de chemin à galets (51, 51', 51″) ou chacun de ces segments de chemin à galets qui peut être sorti du chemin à galets, arrière (50) pour libérer la zone qu'il forme dans le chemin à galets, arrière pour la table relevable de l'unité d'empilage correspondante, peut être entraîné en même temps que l'unité d'empilage correspondante (41, 41', 41″), en étant de préférence relié solidairement à cette unité d'empilage ou en ce que ce segment de chemin à galets peut être sorti du chemin à galets arrière par abaissement vertical.

6. Installation selon l'une des revendications précédentes, caractérisée en ce qu'il est prévu au moins une rangée d'unités d'empilage (40') dont toutes les unités d'empilage (41, 41', 41″) sont des unités d'empilage qui peuvent être déplacées transversalement de manière séparée.

7. Installation selon l'une des revendications précédentes, caractérisée en ce que pour au moins l'une des rangées d'unités d'empilage (40), toutes les unités d'empilage (41, 41') sont mobiles séparément dans la direction transversale à l'exception de la dernière unité d'empilage (41″).

8. Installation selon l'une des revendications précédentes, caractérisée en ce que pour au moins une rangée d'unités d'empilage (40'), sur le côté arrière de l'unité d'empilage (41) la plus en avant, il n'est prévu aucun segment de chemin à galets arrière.

9. Installation selon l'une des revendications précédentes, caractérisée en ce qu'à au moins l'un des chemins à galets arrière (50) est associé un chemin à galets, à palettes ou/et un chemin à galets accumulateur (60) aligné sur le chemin à galets arrière (50), et qui sert au stockage intermédiaire de piles et/ou à l'envoi de palettes (65) vers la ou les unités d'empilage mobiles transversalement.

10. Installation selon la revendication 9, caractérisée en ce qu'aux chemins à galets, à palettes et/ou aux chemins à galets accumulateurs est associé un chemin à galets d'alimentation (64), disposé à l'équerre pour recevoir les palettes.

11. Installation selon l'une des revendications précédentes, caractérisée en ce que la table relevable (42) des unités d'empilage comporte des chemins à galets entraînés pour l'évacuation des piles formées sur ces unités.

12. Installation selon l'une des revendications précédentes, caractérisée en ce que pour au moins l'une des rangées d'unités d'empilage (40), en position de base de sa dernière unité d'empilage (41″), pour sa table relevable (42), il est prévu un chemin à galets fixe pour l'évacuation des piles de cette table relevable.

13. Installation selon l'une des revendications précédentes, caractérisée en ce que le chemin à galets arrière (50) comporte un segment de chemin à galets (53) fixe.

14. Installation selon l'une des revendications précédentes, caractérisée en ce que pour au moins une rangée d'unités d'empilage, les tables relevables de leurs unités d'empilage (41, 41', 41″) sont rapprochées suffisamment pour que les piles puissent être transférées directement d'une table relevable à une autre table relevable.

15. Installation selon l'une des revendications précédentes, caractérisée en ce qu'elle comporte au moins un chemin à galets d'alimentation (75) qui sert au transfert des éléments découpés (17) vers au moins une rangée d'unités d'empilage, de préférence, de deux rangées d'unités d'empilage (40, 40; 40', 40') en regard, et les éléments découpés pouvant être de préférence transférés de l'extrémité de ce chemin à galets d'alimentation par l'intermédiaire d'au moins une table à coussin d'air (76) vers les unités d'empilage correspondantes.

16. Installation selon la revendication 15, caractérisée en ce que le plan d'appui du chemin à galets d'alimentation (75) est situé plus haut que la hauteur de relevage de la table relevable (42) des unités d'empilage par rapport au plan d'appui du chemin à galets arrière (50).

17. Installation selon la revendication 15 ou la revendication 16, caractérisée en ce que les éléments découpés peuvent être transférés sur les chemins à galets d'alimentation (75) à partir d'une tablette de raclage (19) mobile par rapport à ces chemins, et qui sert à recevoir les ensembles de plaques (15) sciées, complets.

18. Installation selon l'une des revendications précédentes, caractérisée en ce qu'elle comporte au moins une rangée d'unités d'empilage (40, 40') avec au moins trois unités d'empilage (41, 41', 41″).

**Claims**

1. Installation for conveying and stacking blanks in connection with a sawing installation (11) for dividing according to colour, wherein the blanks (17) which are manufactured from pattern panels (15) by this sawing installation for dividing according to colour are transportable to a plurality of stacking units (41, 41', 41″), where they are stacked and wherefrom the stacks (48) formed can be transported away over at least one ongoing roller path (50, 70), characterised in that at least two stacking units (41, 41', 41″) are arranged adjacent to one another, forming a row of stacking units (40, 40, 40', 40'), each of which have at their front sides an elevating platform (42) for the stacking; in that this row of stacking units is associated with a rear roller path (50) whose conveying direction runs parallel to the direction of the row (40, 40') of these stacking units and to which there can be transported at least one stacking unit of this row, which stacking unit is transportable transversely to the longitudinal direction of the rear roller path, for the transfer of stacks formed on its elevating platform onto this rear roller path (50).

2. Installation according to claim 1, characterised in that the rear roller path (50) has a region which is provided on the rear side of the stacking unit (41") which is last in the row, and in that at least the stacking unit (41, 41') which is arranged in front of the last stacking unit (41") of this row of stacking units is transversely transportable by moving transversely to the longitudinal direction of the rear roller path, out of its basic position (46) which serves for the stacking, in order that its elevating platform can be conveyed to the rear roller path (50) for transporting away the stacks (48) which are formed on it.

3. Installation according to claim 1 or 2, characterised in that an elevating platform (42) of at least one transversely transportable stacking unit is conveyable into a region of the associated rear roller path (50) which normally is occupied by a separate roller path section (51, 51', 51") of this rear roller path (50), but which is conveyable out of this region for the purpose of introducing the elevating platform into this region.

4. Installation according to claim 1, 2 or 3, characterised in that in at least one row of stacking units (40'), the stacking unit (41") which is last in the row is also transversely transportable, and the region of the rear roller path (50) located to the rear of the said stacking unit (41") is a separate roller path section (51") which can be conveyed out of the rear roller path in order to enable the elevating platform (42) of this stacking unit (41") to be inserted into this rear roller path in its place.

5. Installation according to claim 3 or 4, characterised in that the – or each – roller path section (51, 51', 51") which can be conveyed out of the rear roller path (50) in order to make the region of the rear roller path, which it constitutes, available for the elevating platform of the stacking unit concerned, is movable together with the stacking unit (41, 41', 41") with which it is associated, and preferably is arranged integrally fixed to this stacking unit; or in that this roller path section can be conveyed out of the rear roller path by being lowered vertically downwards.

6. Installation according to any one of the preceding claims, characterised in that at least one row of stacking units (40') is provided, wherein all stacking units (41, 41', 41") are individually transversely transportable stacking units.

7. Installation according to any one of the preceding claims, in at least one row of stacking units (40), all stacking units (41, 41') are individually transversely transportable, with the exception of the last stacking unit (41").

8. Installation according to any one of the preceding claims, characterised in that in at least one row of stacking units (40'), no rear roller path section is provided on the rear side of the frontmost stacking unit (41).

9. Installation according to any one of the preceding claims, characterised in that at least one rear roller path (50) is arranged in front of a storage-and/or pallet-roller path (60) which is in alignement therewith and which serves for intermediately storing stacks and/or for conveying pallets (65) to the transversely transportable stacking unit or -units.

10. Installation according to claim 9, characterised in that associated with the storage- and/or pallet-roller path there is arranged, at right angles thereto, a feed roller path (64) for pallets.

11. Installation according to any one of the preceding claims characterised in that the elevating platforms (42, ) the stacking units have driven roller paths  transporting away the stacks formed on the said platforms.

12. Installation according to any one of the preceding claims, characterised in that in at least one row of stacking units (40), in the basic position of its last stacking unit (41"), following its elevating platform (42) there is arranged a stationary roller path for transporting stacks away from this elevating platform.

13. Installation according to any one of the preceding claims, characterised in that the rear roller path (50) has a stationary roller path section (53).

14. Installation according to any one of the preceding claims, characterised in that in at least one row of stacking units, the elevating platforms of its stacking units (41, 41', 41") are arranged so near to one another that the stacks are also directly transferable from elevating platform to elevating platform.

15. Installation according to any one of the preceding claims, charact sed in that at least one feed roller path (75) is rovided, which serves for the conveying of blanks (17) ro at least one row of stacking units, preferably to two oppositely-standing rows of stacking units (40, 40; 40', 40'), the blanks preferably being transferred from the end of this feed roller path, over at least one air-cushion platform (76), to the stacking units concerned.

16. Installation according to claim 15, characterised in that the supporting plane of the feed roller path (75) is higher than the supporting plane of the rear roller path (50) by the lifting height of the elevating platforms (42) of the stacking units.

17. Installation according to claim 15 or 16, characterised in that the blanks are transferable onto the feed roller paths (75) from a stripping tray (19) which can be moved towards them and which serves for receiving sawn complete panel patterns (15).

18. Installation according to any one of the preceding claims, characterised in that at least one row of stacking units (40, 40') has at least three stacking units (41, 41', 41").

FIG.1A

EP 0 264 781 B1

FIG.1B

FIG.2